# EUROPEAN PATENT SPECIFICATION

(11) **EP 1 719 376 B1**
(45) Date of publication and mention of the grant of the patent: **04.07.2012**
(21) Application number: 04710019.3
(22) Date of filing: 11.02.2004
(51) Int. Cl.: H04W 48/18

(54) **METHOD AND MEANS FOR DETERMINING THE PREFERRED ACCESS NETWORK FOR SERVING A USER EQUIPMENT IN AN IDLE STATE**
VERFAHREN UND MITTEL ZUR BESTIMMUNG DES BEVORZUGTEN ZUGANGSNETZES ZUR VERSORGUNG EINES BENUTZERGERÄTS IN EINEM LEERLAUFZUSTAND
PROCEDE ET MOYENS DE DETERMINATION DE RESEAUX D'ACCES PREFERE POUR SERVIR UN EQUIPEMENT UTILISATEUR A L'ETAT DE REPOS

(43) Date of publication of application: 08.11.2006
(73) Proprietor: Telefonaktiebolaget LM Ericsson (publ), 126 25 Stockholm (SE)
(72) Inventor: TURINA, Dalibor, S-183 57 Täby (SE)
(74) Representative: Tonscheidt, Andreas
(86) International application number: PCT/EP2004/001266
(87) International publication number: WO 2005/079092

(56) References cited:
- WO-A-02/32160
- US-A1- 2002 039 892
- US-B1- 6 334 052

## Description

### Technical field of the invention

The present invention relates to a method and means for determining a preferred access network for serving a user equipment in a multi-access environment..

### Description of Related Art

Nowadays, user equipment is developed, that is capable of connecting to at least two access networks, a so-called dual mode terminal. Such dual mode terminal is capable of connecting to for example so-called 2G networks like GSM (Global System for Mobile communication), D-AMPS (Digital Advanced Mobile Phone System) or PDC (Pacific Digital Cellular) and so-called 3G networks like UTRAN (UMTS [Universal Mobile Telecommunications System] Terrestrial Radio Access Network. A UTRAN can be implemented for example according to WCDMA (Wideband Code Division Multiple Access), CDMA (Code Division Multiple Access), or EDGE Enhanced Data rates for GSM Evolution. An environment enabling more than one access is called multi-access environment.

In the multi-access wireless environment it is advantageous that user equipment is camping in the system where the requested service(s) can be offered in the most efficient way. This is advantageous from the end user perspective with respect to the Quality of service obtained, as well as from the network operator perspective with respect to the optimization of resource utilization. However, it has been shown that changing the system during call set-up, which for example may occur due to service availability through another access or for the load balancing purpose is a non-efficient method. That because, on one side, call-set up procedure becomes usually longer due to excessive signalling for changing the access and, on the other side, network resources are additionally loaded when re-directing the traffic.

For operators providing telecommunication services, it is interesting whether to offer services via a 2G or a 3G system to a subscriber using such equipment. In the following the words terminal and user equipment are used as synonyms. To provide the best possible service to the highest number of subscribers, or in order to reduce cost, some mechanisms have been developed.

A first mechanism is the so-called camp on WCDMA mechanism, wherein WCDMA stands as an example for the described 3G access technologies. At the camp on WCDMA, a 3G and a 2G access network are configured to direct dual mode terminals to WCDMA coverage, as long as a terminal is in a so-called Idle Mode, as soon as WCDMA Coverage quality is good enough for 3G services. In an idle mode, a terminal can be activated for a telecommunications service but is currently not actively delivering such service. Camp on WCDMA thus means that once access networks are configured that way, all dual mode terminals will be directed to WCDMA coverage in Idle Mode.

A second mechanism is the so-called subscription based camping. At subscription based camping user equipment are marked through their subscription profile and that attribute is used to determine in which system they should camp in idle mode. Using this mechanism, a so-called "static load distribution" can be obtained which distributes the mobiles in idle mode according to their subscribed services and the ability of the respective access technology to offer requested services. One prerequisite is that the system where the mobile camps either can offer the subscribed services or can perform a system changeover so that the service can still be reached through the other access.

Partial Roaming can be used to further regulate the Idle Mode load distribution based on IMSI and/or subscription information.

To reduce 3G load, a mechanism called Move Speech Calls to GSM access has been developed. Like WCDMA above, GSM is just one example of a 2G access technology. At that mechanism, a dual mode terminal, being in Idle mode and served by a 3G access network, receiving a speech call is transferred to a 2G access network for operating the call. In general Service and Load based handovers can be used to balance the load based on access network load and requested service in Connected Mode.

Since Camp on WCDMA directs all Dual Mode terminals to 3G coverage, further mechanisms are required to regulate distribution of dual mode terminals in Idle Mode. One of them is Partial Roaming. When an Operator has same MNC (Mobile Network Code) for WCDMA and GSM, Partial Roaming can be used to reject a 2G only subscriber from 3G access. This will tell the terminal to stay with the same mobile network but change Location Area hence direct this terminal to 2G access of the same Operator. Partial Roaming requires different location area identifier settings for GSM and WCDMA access.

A further mechanism is National Roaming Restriction. When an Operator has different MNCs for 3G and 2G, National Roaming Restriction can be used. When National Roaming Restriction is used, a terminal can select any other mobile network, not necessarily the GSM access of the same Operator, if more 2G networks are available.

Yet another mechanism is Load Based Inter-system Handover. Load Based Inter-system Handover supports intersystem handover of e.g. speech calls based on cell load of current cell and target cell.

Core Network transfers cell load information between 2G access network node and 3G access network node. Access network takes the handover decision, comparing the Cell Load Information received from target system with the Cell Load Information of own cells.

If for example the 2G access network is operating according to GSM standards and the 3G access network is operating according WCDMA standards, then, in the case that the WCDMA network is loaded and the GSM network has capacity to handle calls, speech calls can be used for load balancing. For example a speech call set up in the WCDMA access network can be handed over to GSM network based on cell load information of the current WCDMA access network cell and the target GSM access network cell.

US 2003/0134637 shows a mobile station which includes processing circuitry and a memory for storing a preferred roaming list and system priority data. The processing circuitry is adapted to detect a communications event for a currently selected wireless communications system and update an entry in the system priority data to reflect the occurrence of the detected communications event.

WO 02/32160 discloses a technique for determining cell allocation in a network supporting different cell types wherein users have at least one of a plurality of service types. The method includes defining a priority table comprising, for each service type, a priority for each cell type

Yet another solution to the static load distribution would be to dynamically adjust the parameters for cell reselection so that user equipment are distributed based solely on the cell reselection procedure among candidate cells. That method has though a basic drawback of not being able to steer the user equipment in idle mode towards the network that can offer the subscribed services in most efficient manner in the case that service capabilities are different for the different access networks, which is the case for example if one access network is operating according to GSM and an another one is operating according to WCDMA standards.

It is a shortcoming of the state of the art that the current mechanisms are either inefficient or highly complex.

It is therefore an object of the invention to provide a method and means that are less complex but still efficient.

### Summary

This will be solved advantageously by the method of claim 1 and claim 7, the the core network node of claim 6.

It is advantageous that the determining is done by using statistical data, this enables a fine granularity of complexity by selecting which data are to be taken into account.

Further advantageous embodiments can be derived from the dependent claims.

It is object of the invention to provide a method for determining a first of at least two access networks that is preferred for serving a user equipment that is in an idle state, Said method comprises the steps of collecting statistical data about services used via the user equipment, and determining, based on the statistical data, that the first network is preferred for attaching said user equipment.

In an embodiment of the invention, the first and the at least one of the further networks have different service capabilities.

A service capability can be one of bandwidth, delay, extent of service area, support of circuit switched services, support of packet switched services, support of a particular multiple division access method, or quality of received radio signal at a particular place. The quality of a received radio signal can be for example the signal strength, the signal noise ratio, an extent to which the signal is interfered by other signals or by reflections of the same signals with a different delay.

In an embodiment of the invention one parameter of the statistical data is service capability requested by the user equipment.

In a preferred embodiment of the invention one parameter in the statistical data is the relative frequency of usage of the first network by the user equipment.

In an embodiment of the invention, the method comprises the additional step of sending an indication of the preferred network.

It is a further object of the invention to provide a method for handling a user equipment in a network that is capable of granting access via at least two different access networks. The method comprises the steps of detecting or receiving an indication that the user equipment is in an idle mode, of determining a preferred access network for serving the user equipment while it is in the idle mode, of detecting that the user equipment is attached to another network than the preferred one, and of initiating the handover to the preferred network.

It is also object of the invention to provide a network entity for determining a preferred access network for serving a user equipment in an idle mode. Said node comprises an input output unit for sending and receiving messages, a storage for storing statistical data, and a processing unit that is arranged to processing the statistical data, for controlling the other units and for determining the preferred access network.

In an embodiment of the invention the processing unit of the network entity takes the service capability requested by the user equipment into account when determining the preferred access network.

In a preferred embodiment of the invention the network entity, the processing unit uses information about the relative frequency of usage of an access network by the user equipment for determining the preferred network.

The processing unit can be arranged to initiate the sending of an indication of the preferred network.

Yet another object of the invention is to provide a core network node comprising an input output unit for sending and receiving messages and a processing unit for controlling units of the core network node. The processing unit is arranged to recognise that a user equipment is in an idle mode, to determine a preferred access network for serving the user equipment while it is in said idle mode, to detect that the user equipment is attached to another network than the preferred one and to initiate a handover of the user equipment to the preferred network.

### Brief description of the drawings

The following figures show:
- Fig. 1: depicts a flow diagram of the invented method,
- Fig. 2: depicts a flow diagram of a further invented method,
- Fig. 3: depicts a signal flow of an implementation of the invented method,
- Fig. 4: depicts a network entity according to the invention,
- Fig. 5: depicts a core network node according to the invention,

### Detailed Description of Preferred Embodiments

In the following the invention will be further described by means of examples and by means of figures.

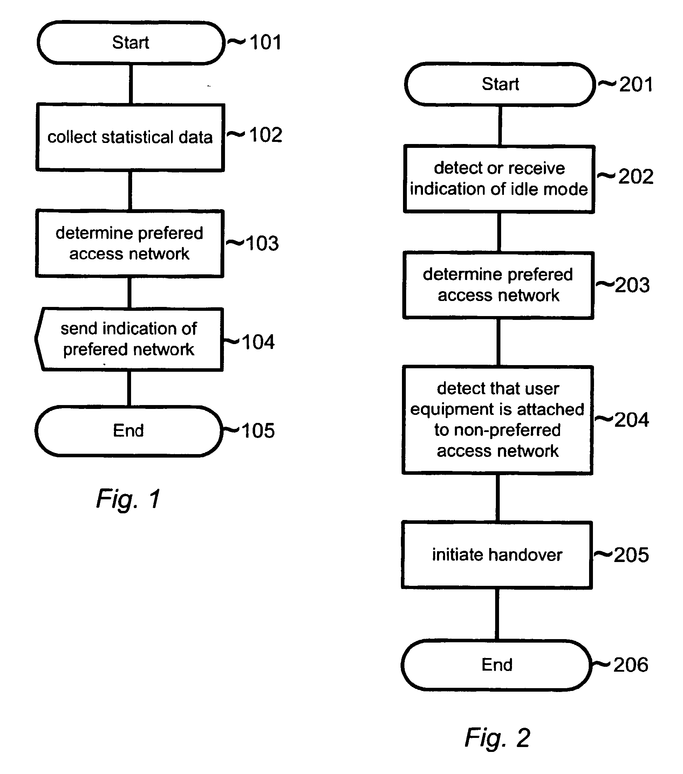

Fig. 1 depicts a flow diagram of the invented method. In a first step 101 the method is started. In a further step 102 statistical data is collected. This step can be performed for example by receiving information from a core network control node where data about connections via user equipment are available. Said information can as well be received from a node collecting charging data. The collection can also be implemented by receiving statistical data collected by another node.

In a next step 103 a preferred access network is determined. The determination is done using the statistical data collected in step 102. The determining can be based for example on information about the relative frequency of using a particular access network. For example if a first network A is used in 80% of the time, a second network B in 15% and a third access network C 5 % of the time, network A could be the determined one. To achieve a more dynamic behaviour, the time interval from that statistical data is collected can be reduced or it can be expanded to achieve the opposite goal. Furthermore location information can be taken into account, for example if user equipment located at a certain place like an airport, it mostly uses network B for telecommunication services. In that case network B would be determined. A further decision parameter can be for example time like time of the day, day of the week, day of the month, a particular date or a combination of these. Another parameter can be service capability requested via the user equipment. If the user often requests a particular service via the user equipment, that requires a particular service capability that is most efficiently, or preferably provided by a particular network, said network will be determined. If the user requests said service capability usually at a particular time this can be taken into account as well. A further parameter can be the load situation at the access networks. The above mentioned parameter as well as further parameter known to those skilled in the art can be used themselves and in combination with each other to determine a preferred access network. The selection of the parameter can be supported by pattern recognition means as mathematical functions, transformations and alike.

In a preferred embodiment of the invention, an indication like an identifier of the preferred network is sent in a further step 104, for example to a network node storing said indication. The method ends in a step 105.

The described method can be implemented for example in a network node located in the core or an access network of the telecommunication network or connected to the communication network. The method can as well be split among two or more nodes, in particular the steps 102 of collecting statistical data and 103 of determining a preferred access network can be implemented in different nodes.

Figure 2 depicts a flow diagram of a further invented method. The method can be implemented for example in a core network control node like an mobile services switching centre, a gateway mobile services switching centre, a serving GPRS support node, a GPRS support node and alike. In a first step 201 the method is started. In a next step 202 it is detected or an indication is received that a user equipment is in idle mode. In a next step 203 a preferred access network for serving the user equipment in idle mode is determined. This can be implemented as described for step 103 of figure 1 or by simply checking an indication of a preferred access network that is either stored locally or requested from a node storing said information. In a further step 204 it is detected that the user equipment is not attached to the preferred network. Therefore, in a further step 205 a handover is initiated to the preferred network, for example by sending a message to an access network node. The method terminates in a last step 206.

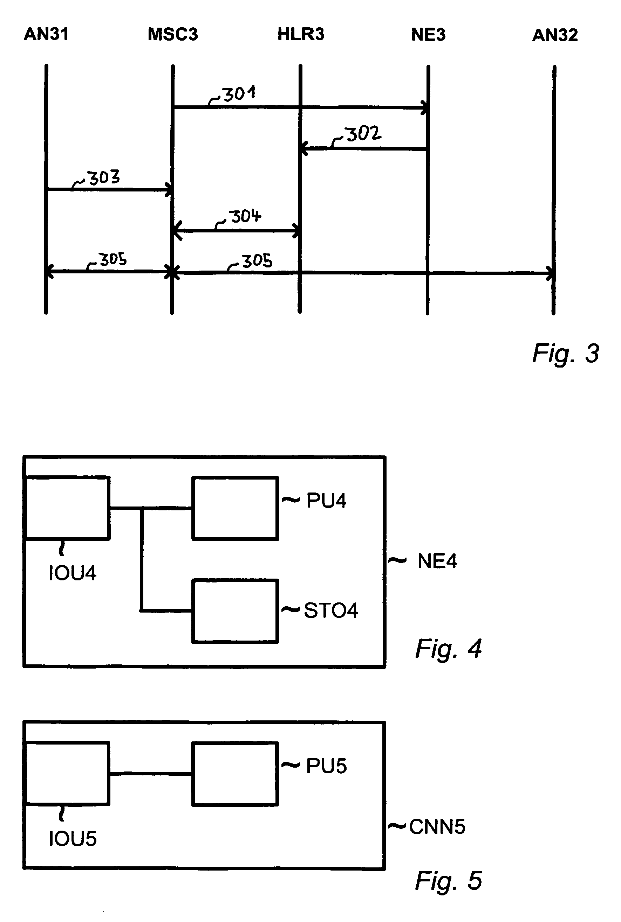

Figure 3 depicts a signal flow of an implementation of the invented method. Depicted are a first access network AN31 and a second access network AN32. An access network is a network that enables a user to be connected to a telecommunications network. Well known access networks are wireline networks operating according to ISDN (Integrated Services Digital Network) standards or POTS (Plain Old Telephony System), wireless networks like analogue networks or DECT (Digital Encryption Cellular Telephony), satellite based systems, cellular networks operating according to standards like D-AMPS (Digital-American Mobile Phone System), AMPS (American Mobile Phone System), IS-95, IS-2000, PDC (Pacific Digital Cellular), NMT (Nordic Mobile Telephony), GSM (Global System for Mobile telecommunication), or UMTS (Universal Mobile Telecommunications System) or more specific UTRAN (UMTS Terrestrial Radio Access Network). In a preferred embodiment of the invention the first access network operates according to GSM standards and the second access network operates according to at least one set of UMTS standards.

Further depicted is a core network node MSC3 that can provide statistical data about a particular user equipment, for example a core network control node or a charging data collecting node. A network node HLR3, for example a home location register, a home subscriber server, or a AAA-server (Accounting, Authentication and Authentication-server), for storing an indicator of a preferred access network, and a network entity NE3 for determining a preferred access network. In a first step 301, the core network node MSC3 provides the network entity NE3 with statistical data. In a preferred embodiment of the invention, the core network node MSC3 is a node collecting charging data, for example Charging Data Records.

In a next step 302 the network entity determines form the statistical data a preferred network for the user equipment for serving it in an idle state. It sends an indication of the preferred network to the network node HLR3. In a preferred embodiment the network node HLR3 is a home location register. In a further step 303, the core network node MSC3 receives an indication that the user equipment is in an idle mode. In the depicted embodiment, the core network node is a core network control node serving the user equipment. In a next step 304, the core network control node MSC3 determines a preferred access network by sending a request to the core network node HLR3 and receives an indication of the preferred access network, in the depicted case the second access network AN32. In a next step 305, the core network control node detects that the user equipment is currently attached to the non-preferred first access network AN31 and initiates a handover to the preferred second access network AN32. The steps 302, 303, 304 and 305 are according to a preferred embodiment.

Figure 4 depicts a network entity NE4 according to the invention, comprising an input/output unit IOU4 for sending and receiving messages, connected to a processing unit PU4 and a storage STO4. The storage is adapted to store statistical data. The processing unit PU4is adapted to control the other units, to process the statistical data and to determine a preferred access network for serving a user equipment while the user equipment is in an idle mode. In an embodiment of the invention the processing unit PU4 is arranged to take service capabilities requested by the user equipment into account when determining the preferred access network.

In an embodiment of the invention the processing unit PU4 is arranged to take information about the relative frequency of usage of an access network into account when determining the preferred access network.

The processing unit PU4can be arranged to initiate a sending of an indication of a preferred access network. The units can be implemented by means of hardware or software or a combination of both. The network entity NE4 can be implemented in a split mode, that is the storage ST04 and the processing unit PU4 are not necessarily located within the same housing but in two different housings. In such embodiment, they may not share the same input/output unit IOU4.

Figure 5 depicts a core network node CNN5 according to the invention. The core network node CNN5 comprises an input/output unit IOU5 for sending and receiving messages and a processing unit PU5. The processing unit PU5 is arranged to recognise that a user equipment is in an idle mode, to determine a preferred access network for serving the user equipment while it is in said idle mode, to detect that the user equipment is attached to another network than the preferred one and to initiate a handover of the user equipment to the preferred network. The units can be implemented by means of hardware or software or a combination of both. The functions of the processing unit PU5 can be implemented in more than one processor that can be located in different housings and nodes. In such embodiment, the parts of the processing unit do not necessarily share the same input/output unit IOU5.

## Claims

1. Method for handling a user equipment in a network capable of granting access via at least two different access networks, wherein the method is implemented in a core network control node and comprises the steps of :
- detecting or receiving (202) an indication that the user equipment is in an idle mode,
- determining (203), based on statistical data stored in a core network node, a preferred access network for serving the user equipment while it is in the idle mode, wherein one parameter in the statistical data is the relative frequency of usage of the first network by the user equipment,
- detecting (204) that the user equipment is attached to another network than the preferred one, and
- initiating (205) the handover to the preferred network.

2. Method according to claim 1, wherein the first and the at least one of the further networks have different service capabilities,

3. Method according to claim 2, wherein a service capability is one of bandwidth, delay, extent of service area, support of circuit switched services, support of packet switched services, support of a particular multiple division access method, or quality of received radio signal at a particular place.

4. Method according to any of the preceding claims, wherein one parameter in the statistical data is service capability requested by the user equipment.

5. Method according to any of the preceding claims, with the additional step of sending (104) an indication of the preferred network.

6. Core network node (CNN5) comprising an input output unit (IOU5) for sending and receiving messages and a processing unit (PU5) for controlling units of the core network node **characterised by** that the processing unit is arranged:
- to recognise that a user equipment is in an idle mode,
- to determine, based on statistical data stored in the core network node, a preferred access network for serving the user equipment while it is in said idle mode, wherein one parameter in the statistical data is the relative frequency of usage of the first network by the user equipment,
- to detect that the user equipment is attached to another network than the preferred one and
- to initiate a handover of the user equipment to the preferred network.

7. Core Network node according to claim 6, wherein the processing unit takes the service capability requested by the user equipment into account when determining the preferred access network.

8. Core Network node according to claim 6 or 7, wherein the processing unit is arranged to initiate the sending of an indication of the preferred network.

## Patentansprüche

1. Verfahren zum Steuern einer Benutzereinrichtung in einem Netzwerk, das über mindestens zwei verschiedene Zugangsnetze Zugang gewähren kann, wobei das Verfahren in einem Kernnetzsteuerknoten implementiert ist und die folgenden Schritte umfasst:
- Erkennen oder Empfangen (202) einer Anzeige, dass die Benutzereinrichtung in einem Ruhemodus ist,
- Bestimmen (203) auf der Basis von statistischen Daten, die in einem Kernnetzknoten gespeichert sind, eines bevorzugten Zugangsnetzes zum Versorgen der Benutzereinrichtung, während sie im Ruhemodus ist, wobei ein Parameter in den statistischen Daten die relative Nutzungshäufigkeit des ersten Netzwerks durch die Benutzereinrichtung ist,
- Erkennen (204), dass die Benutzereinrichtung an ein anderes Netzwerk als das bevorzugte angeschlossen ist, und
- Einleiten (205) der Umschaltung zum bevorzugten Netzwerk.

2. Verfahren nach Anspruch 1, wobei das erste und das mindestens eine der weiteren Netzwerke verschiedene Dienstleistungen aufweisen.

3. Verfahren nach Anspruch 2, wobei eine Dienstleistung eines von einer Bandbreite, Verzögerung, Umfang des Versorgungsbereichs, Unterstützung von leitungsvermittelten Diensten, Unterstützung von paketvermittelten Diensten, Unterstützung eines bestimmten Vielfachzugriffsverfahrens oder Qualität eines empfangenen Funksignals an einem bestimmten Ort ist.

4. Verfahren nach einem der vorhergehenden Ansprüche, wobei ein Parameter in den statistischen Daten eine Dienstleistung ist, die von der Benutzereinrichtung angefordert wird.

5. Verfahren nach einem der vorhergehenden Ansprüche mit dem zusätzlichen Schritt des Sendens (104) einer Anzeige des bevorzugten Netzwerks.

6. Kernnetzknoten (CNN5), umfassend eine Eingangs-/Ausgangseinheit (IOU5) zum Senden und Empfangen von Nachrichten und eine Verarbeitungseinheit (PU5) zum Steuern von Einheiten des Kernnetzknotens, **dadurch gekennzeichnet, dass** die Verarbeitungseinheit ausgelegt ist zum:
- Erkennen, dass eine Benutzereinrichtung in einem Ruhemodus ist,
- Bestimmen auf der Basis von statistischen Daten, die im Kernnetzknoten gespeichert sind, eines bevorzugten Zugangsnetzes zum Versorgen der Benutzereinrichtung, während sie im Ruhemodus ist, wobei ein Parameter in den statistischen Daten die relative Nutzungshäufigkeit des ersten Netzwerks durch die Benutzereinrichtung ist,
- Erkennen, dass die Benutzereinrichtung an ein anderes Netzwerk als das bevorzugte angeschlossen ist, und
- Einleiten einer Umschaltung der Benutzereinrichtung zum bevorzugten Netzwerk.

7. Kernnetzknoten nach Anspruch 6, wobei die Verarbeitungseinheit die von der Benutzereinrichtung angeforderte Dienstleistung beim Bestimmen des bevorzugten Netzes berücksichtigt.

8. Kernnetzknoten nach Anspruch 6 oder 7, wobei die Verarbeitungseinheit so ausgelegt ist, dass sie das Senden einer Anzeige des bevorzugten Netzwerks einleitet.

## Revendications

1. Procédé pour gérer un équipement d'utilisateur dans un réseau capable d'accorder l'accès via au moins deux réseaux d'accès différents, dans lequel le procédé est implémenté dans un noeud de commande de réseau central et comprend les étapes consistant à :
- détecter ou recevoir (202) une indication que l'équipement d'utilisateur est en mode de repos,
- déterminer (203), sur la base des données statistiques mémorisées dans un noeud de réseau central, un réseau d'accès préféré pour desservir l'équipement d'utilisateur alors qu'il est dans le mode de repos, dans lequel un paramètre dans les données statistiques est la fréquence relative d'utilisation du premier réseau par l'équipement d'utilisateur,
- détecter (204) que l'équipement d'utilisateur est rattaché un autre réseau que celui préféré, et
- amorcer (205) le transfert intercellulaire vers le réseau préféré.

2. Procédé selon la revendication 1, dans lequel la premier et au moins un des autres réseaux ont des capacités de service différentes.

3. Procédé selon la revendication 2, dans lequel une capacité de service est une d'une bande passante, un retard, une étendue de zone de desserte, une prise en charge de services à commutation de circuits, une prise en charge de services à commutation de paquets, une prise en charge d'un procédé particulier d'accès multiple par répartition ou une qualité du signal radio reçu à un endroit particulier.

4. Procédé selon une quelconque des revendications précédentes, dans lequel un paramètre dans les données statistiques est la capacité de service demandée par l'équipement d'utilisateur.

5. Procédé selon une quelconque des revendications précédentes, comportant l'étape additionnelle d'envoi (104) d'une indication du réseau préféré.

6. Noeud de réseau central (CNN5) comprenant une unité d'entrée sortie (IOU5) pour envoyer et recevoir des messages et une unité de traitement (PU5) pour commander des unités du noeud de réseau central, **caractérisé en ce que** l'unité de traitement est agencée afin de :
- reconnaître qu'un équipement d'utilisateur est dans un mode de repos,
- déterminer, sur la base des données statistiques mémorisées dans le noeud de réseau central, un réseau d'accès préféré pour desservir l'équipement d'utilisateur alors qu'il est dans ledit mode de repos, dans lequel un paramètre dans les données statistiques est la fréquence relative d'utilisation du premier réseau par l'équipement d'utilisateur,
- détecter que l'équipement d'utilisateur est rattaché à un autre réseau que celui préféré et
- amorcer un transfert intercellulaire de l'équipement d'utilisateur vers le réseau préféré.

7. Noeud de réseau central selon la revendication 6, dans lequel l'unité de traitement prend en compte la capacité de service demandée par l'équipement d'utilisateur lors de la détermination du réseau d'accès préféré.

8. Noeud de réseau central selon les revendications 6 ou 7, dans lequel l'unité de traitement est agencée pour amorcer l'envoi d'une indication du réseau préféré.
